# EUROPÄISCHE PATENTANMELDUNG

(11) **EP 2 821 509 A1**
(43) Veröffentlichungstag der Anmeldung: **07.01.2015**
(21) Anmeldenummer: 13174447.6
(22) Anmeldetag: 01.07.2013
(51) Int. Cl.: C21B 13/00, C21B 13/14

(54) **Entschwefelung von Gasen bei der Herstellung von Roheisen**

(71) Anmelder: Siemens VAI Metals Technologies GmbH, 4031 Linz (AT)
(72) Erfinder: Millner, Robert, 3382 Loosdorf (AT)
(74) Vertreter: Maier, Daniel Oliver

(57) **Zusammenfassung**

Die Erfindung betrifft ein Verfahren zur Herstellung von flüssigem Roheisen (1), bei dem eisenoxidhältige Einsatzstoffe (2) in einer ersten Reduktionsanlage (4) mittels eines Reduktionsgases (5) zu einem teilreduzierten ersten Eisenprodukt (3) reduziert und in einem Einschmelzvergaser (11) zu dem flüssigen Roheisen (1) aufgeschmolzen werden, wobei das verbrauchte Reduktionsgas (5) als Exportgas (6) in eine zweite Reduktionsanlage (7) eingebracht wird, und wobei ein schwefelhältiges Gas (13), zusammen mit einem sauerstoffhältigen Gas (9) und/oder zusammen mit Staub (16) in den Einschmelzvergaser (11) und/oder in die Reduktionsgasleitung (12) eingebracht wird.

Weiter betrifft die Erfindung eine Vorrichtung zur Durchführung des Verfahrens.

Damit kann schwefelhältiges Gas 13 bei der Herstellung von flüssigem Roheisen 1, beziehungsweise DRI, bei gleichzeitiger Produktivitätssteigerung eingesetzt werden, ohne die Umwelt zu belasten oder die Qualität des flüssigen Roheisens 1 oder des DRI negativ zu beeinflussen.

## Beschreibung

### Technisches Gebiet

Die Erfindung betrifft ein Verfahren zur Herstellung von flüssigem Roheisen, wobei das Verfahren die Reduktion von eisenoxidhältigen Einsatzstoffen zu einem teilreduzierten ersten Eisenprodukt in einer ersten Reduktionsanlage mittels eines Reduktionsgases und Abziehen des bei der Reduktion verbrauchten Reduktionsgases als Exportgas, das Entfernen von CO₂ aus dem Exportgas und Einbringen des Exportgases in zumindest eine zweite Reduktionsanlage zur Herstellung eines teilreduzierten zweiten Eisenprodukts, das Einbringen des teilreduzierten ersten Eisenprodukts, eines sauerstoffhältigen Gases und Kohlenstoffträger in einen Einschmelzvergaser, die Vergasung der Kohlenstoffträger mit dem sauerstoffhältigen Gas und Aufschmelzen des teilreduzierten ersten Eisenprodukts zu flüssigem Roheisen unter Entstehung des Reduktionsgases im Einschmelzvergaser und das Einbringen zumindest einer Teilmenge des Reduktionsgases in die erste Reduktionsanlage mittels einer Reduktionsgasleitung umfasst.

### Stand der Technik

Bei der Herstellung von Koks in einer Kokerei oder bei der Vergasung von Kohle mit Sauerstoff fallen Gase, beispielsweise Koksgas einer Kokerei, an, die neben einem hohen Anteil an Wasserstoff (H₂) und Kohlenmonoxid (CO) auch Schwefelwasserstoff (H₂S) und Methan (CH₄) enthalten. Das Koksofengas wird oftmals zur Stützung des Heizwerts von Hochofengichtgas vor dessen Nutzung in Winderhitzern eingesetzt. Weitere bekannte Nutzungsarten des Koksofengases sind der Einsatz als Brenngas in Brammenstoßöfen oder Rollenherdöfen, der Einsatz in Kraftwerken zur Stromerzeugung, das Einblasen über die Windformen von Hochöfen zur Senkung des Reduktionsmittelverbrauches. Weiter wird das Koksofengas oftmals zusammen mit einem weiteren Gas als Reduktionsgas in Direktreduktionsanlagen eingesetzt. In der Direktreduktionsanlage erfolgt eine Reduktion von eisenoxidhältigen Einsatzstoffen zu direkt reduziertem Eisen (DRI), beispielsweise Eisenschwamm.

Erfolgt eine Nutzung des Koksofengases in Direktreduktionsanlagen, so ist dies mit folgenden Nachteilen verbunden:
- Koksofengas enthält Schwefel hauptsächlich in Form von Schwefelwasserstoff (H₂S). Üblich sind H₂S-Gehalte zwischen 300mg pro Normkubikmeter Koksofengas und 500mg pro Normkubikmeter Koksofengas. Wird das Koksofengas in die Direktreduktionsanlage eingebracht, so lagert sich ein Großteil des im Koksofengas enthaltenen Schwefelwasserstoffes nach der Reaktionsgleichung Fe (Eisen, DRI) + H₂S (Schwefelwasserstoff) -> FeS (Eisen(II)-sulfid) + H₂ im DRI beziehungsweise im Eisenschwamm an und erhöht damit den Schwefelgehalt im DRI. Das DRI wird üblicherweise in einem Electric Arc Furnace (EAF) oder in einem Basic Oxygen Furnace (BOF) zu flüssigem Stahl weiterverarbeitet. Durch den erhöhten Schwefelgehalt im DRI ist eine zusätzliche Entschwefelung des DRI, entweder direkt im EAF oder im BOF oder des im EAF oder im BOF hergestellten flüssigen Stahls erforderlich.
- Koksofengas enthält neben Schwefel auch Methan. Üblich sind Methangehalte zwischen 20 und 25 Volumsprozent im Koksofengas. Wird das das Koksofengas umfassende Reduktionsgas in das Direktreduktionsaggregat eingebracht, so zerfällt das Methan in einer endothermen Reaktion unter Absenkung der Reduktionsgastemperatur. Speziell bei einem Methangehalt von über 8 Volumsprozent im Reduktionsgas wird die Reduktionsgastemperatur unter eine für die Reduktion der eisenerzhältigen Einsatzstoffe erforderliche Mindesttemperatur abgesenkt, und damit die Produktivität und Anlagenleistung des Direktreduktionsaggregates wesentlich verringert. Deshalb ist der Einsatz von Koksofengas in Direktreduktionsanlagen mengenmäßig beschränkt.

Zur Vermeidung dieser Nachteile wird das Koksofengas vor dessen Nutzung zur Herstellung von DRI beispielsweise mittels aus dem Stand der Technik bekannten Methoden einer Entschwefelung und/oder einer Behandlung in einem sogenannten Thermal Reaktorsystem zur Umwandlung des im Koksofengas enthaltenen Methans zu Kohlenmonoxid (CO) und Wasserstoff unterzogen. Dazu sind jedoch aufwändige und kostenintensive Methoden beziehungsweise Anlagen erforderlich.

### Zusammenfassung der Erfindung

### Technische Aufgabe

Die Aufgabe der vorliegenden Erfindung ist die Bereitstellung eines Verfahrens und einer Vorrichtung zur Entschwefelung von Gasen bei der Herstellung von flüssigem Roheisen.

### Technische Lösung

Gelöst wird diese Aufgabe durch ein Verfahren zur Herstellung von flüssigem Roheisen, wobei das Verfahren umfasst: Reduktion von eisenoxidhältigen Einsatzstoffen zu einem teilreduzierten ersten Eisenprodukt in einer ersten Reduktionsanlage mittels eines Reduktionsgases und Abziehen des bei der Reduktion verbrauchten Reduktionsgases als Exportgas, Entfernen von CO₂ aus dem Exportgas und Einbringen des Exportgases in zumindest eine zweite Reduktionsanlage zur Herstellung eines teilreduzierten zweiten Eisenprodukts, Einbringen des teilreduzierten ersten Eisenprodukts, eines sauerstoffhältigen Gases und Kohlenstoffträger in einen Einschmelzvergaser, Vergasung der Kohlenstoffträger mit dem sauerstoffhältigen Gas und Aufschmelzen des teilreduzierten ersten Eisenprodukts zu dem flüssigen Roheisen unter Entstehung des Reduktionsgases im Einschmelzvergaser, Einbringen zumindest einer Teilmenge des Reduktionsgases in die erste Reduktionsanlage mittels einer Reduktionsgasleitung, wobei das Verfahren weiter umfasst:
- Eindüsen eines schwefelhältigen Gases, insbesondere Koksofengas, zusammen mit dem sauerstoffhältigen Gas und gegebenenfalls zusammen mit Feinkohle in den Einschmelzvergaser mittels Sauerstoffdüsen und/oder
- Eindüsen des schwefelhältigen Gases zusammen mit Staub und dem sauerstoffhältigen Gas in den Einschmelzvergaser mittels Staubbrenner und/oder
- Eindüsen des schwefelhältigen Gases zusammen mit dem sauerstoffhältigen Gas in den Einschmelzvergaser mittels Sauerstoffbrenner und/oder
- Einbringen des schwefelhältigen Gases in die Reduktionsgasleitung.

In der ersten Reduktionsanlage erfolgt mittels des Reduktionsgases die Reduktion der eisenoxidhältigen Einsatzstoffe zu dem ersten teilreduzierten Eisenprodukt. Die erste Reduktionsanlage kann beispielsweie als ein aus dem Stand der Technik bekannter COREX® - Reduktionsschacht oder als ein Wirbelschichtreaktor einer FINEX® - Reduktionskaskade ausgebildet sein. Unter eisenoxidhältige Einsatzstoffe sind Eisenerzprodukte zu verstehen. Das bei der Reduktion verbrauchte Reduktionsgas wird aus der ersten Reduktionsanlage als Exportgas abgezogen. Üblicherweise wird dieses Exportgas auch mit dem Ausdruck Topgas bezeichnet. In der vorliegenden Anmeldung wird das Exportgas jedoch in eine von der ersten Reduktionsanlage separate zweite Reduktionsanlage, gegebenenfalls in Mischung mit weiteren Gasen, eingebracht beziehungsweise exportiert. Aus dem Exportgas, beziehungsweise der Mischung, wird das CO₂ mittels aus dem Stand der Technik bekannten Einrichtungen, beispielsweise PSA-Anlagen entfernt und nach Aufheizung in die zweite Reduktionsanlage eingebracht. Die zweite Reduktionsanlage ist vorzugsweise als Direktreduktionsschacht ausgebildet. Bekannte Direktreduktionsschächte sind beispielsweise MIDREX® - Hochdruckschächte oder MIDREX® - Niederdruckschächte. Die zweite Reduktionsanlage kann auch, so wie die erste Reduktionsanlage, als Wirbelschichtreaktor einer Reduktionskaskade ausgebildet sein. In der zweiten Reduktionsanlage erfolgt die Reduktion von weiteren eisenoxidhältigen Einsatzstoffen zu dem zweiten teilreduzierten Eisenprodukt, insbesondere zu Direct Reduced Iron (DRI) beziehungsweise Eisenschwamm. Der Eisenschwamm wird nachfolgend in einem Electric Arc Furnace (EAF) oder in einem Basic Oxygen Furnace (BOF) zu flüssigem Stahl weiterverarbeitet. Das im ersten Reduktionsaggregat hergestellte teilreduzierte erste Eisenprodukt wird im Einschmelzvergaser unter Zugabe der Kohlenstoffträgern und des sauerstoffhältigen Gases zu flüssigem Roheisen eingeschmolzen. Bei der Vergasung der Kohlenstoffträger durch das sauerstoffhältige Gas entsteht das Reduktionsgas, welches mittels der Reduktionsgasleitung in die erste Reduktionsanlage eingebracht wird.

Erfindungsgemäß wird das schwefelhältige Gas mittels der Sauerstoffdüsen zusammen mit dem sauerstoffhältigen Gas und gegebenenfalls zusammen mit der Feinkohle in den Einschmelzvergaser eingedüst. Das schwefelhältige Gas fällt bei der Herstellung von Koks in einer Kokerei oder bei der Vergasung von Kohle mit Sauerstoff an. Insbesondere ist unter schwefelhältigem Gas Koksofengas aus einer Kokerei zu verstehen. Solche Gase enthalten neben einem hohen Anteil an Wasserstoff (H₂) und Kohlenmonoxid (CO) auch Schwefel (S) und Methan (CH₄).

Eine typische Zusammensetzung von Koksofengas ist wie folgt:
- zwischen 60 und 65 Volumsprozent Wasserstoff (H₂),
- zwischen 2 und 3 Volumsprozent Stickstoff (N₂),
- zwischen 6 und 6,5 Volumsprozent Kohlenmonoxid (CO),
- zwischen 20 und 25 Volumsprozent Methan (CH₄),
- zwischen 2,5 und 3,5 Volumsprozent andere Kohlenwasserstoffe (CₙHₘ),
- zwischen 1,5 und 1,5 Volumsprozent Kohlendioxid (CO₂),
- zwischen 350 und 500 mg Schwefelwasserstoff (H₂S) pro Normkubikmeter Koksofengas,
- zwischen 500 und 550 mg Teer pro Normkubikmeter Koksofengas und
- zwischen 500 und 550 mg Staub pro Normkubikmeter Koksofengas

Die Eindüsung von Feinkohle ist unter dem Ausdruck Pulverized Coal Injection (PCI) bekannt. Dabei dient als Treibgas normalerweise Stickstoff, wodurch auch das im Einschmelzvergaser gebildete Reduktionsgas einen bei der Reduktion der eisenoxidhältigen Einsatzstoffe wirkungslosen Stickstoffanteil enthält. Erfindungsgemäß wird der Stickstoffanteil durch das schwefelhältige Gas substituiert beziehungsweise verringert mit dem Vorteil eines effizienteren Reduktionsprozesses sowohl in der ersten als auch in der zweiten Reduktionsanlage.

Das schwefelhältige Gas wird in einer weiteren Variante des erfindungsgemäßen Verfahrens mittels Staubbrenner zusammen mit dem Staub und dem sauerstoffhältigen Gas, bevorzugt mit technisch reinem Sauerstoff in den Einschmelzvergaser eingedüst. Der Staub stammt beispielsweise von Trockenentstaubungseinrichtungen der ersten Reduktionsanlage. Durch den zusätzlichen Energieeintrag des Sauerstoffs im sauerstoffhältigen Gas ist es möglich, Staub mit geringem Kohlenstoffgehalt mittels Staubbrenner zu agglomerieren, so dass der Staub nicht mit dem Reduktionsgas aus dem Einschmelzvergaser ausgetragen wird.

Das schwefelhältige Gas kann auch zusammen mit dem sauerstoffhältigen Gas mittels Sauerstoffbrenner in den Einschmelzvergaser eingedüst oder direkt in die Reduktionsgasleitung eingebracht werden. In der Reduktionsgasleitung befindet sich vorzugsweise eine Entstaubungseinrichtung, insbesondere ein Heißgaszyklon, in welcher das aus dem Einschmelzvergaser stammende Reduktionsgas vor dem Einbringen in die erste Reduktionsanlage entstaubt wird. Da die Temperatur des schwefelhältigen Gases unter der Temperatur des vom Einschmelzvergaser abgezogenen Reduktionsgases liegt, erfolgt durch das Einleiten des schwefelhältigen Gases in die Reduktionsgasleitung vor der Entstaubungseinrichtung - in Strömungsrichtung des Reduktionsgases gesehen - eine Kühlung des Reduktionsgases. Das schwefelhältige Gas wirkt in diesem Fall zusätzlich als Kühlgas zur Einstellung der für die Reduktion in der ersten Reduktionsanlage optimalen Temperatur und ermöglicht gleichzeitig eine Reduktion der erforderlichen Kühlgasmenge. Gegebenenfalls wird das schwefelhältige Gas vor dem Einleiten in die Reduktionsgasleitung in einer Vorwärmeinrichtung, insbesondere in einem Wärmetauscher, vorgewärmt. In der Vorwärmeeinrichtung wird beispielsweise die fühlbare Wärme eines Hüttenwerksgases genutzt. Dadurch wird, insbesondere wenn die Temperatur des schwefelhältigen Gases sehr viel geringer als die Temperatur des Reduktionsgases ist, die zuführbare Menge des schwefelhältigen Gases maximiert.

Kommt das schwefelhältige Gas, in dem der Schwefel hauptsächlich in Form von Schwefelwasserstoff (H₂S) enthalten ist, in Kontakt mit dem Eisen (Fe) des ersten teilreduzierten Eisenprodukts, so erfolgt eine Reaktion nach der Reaktionsgleichung Fe + H₂S -> FeS (Eisen(II)-sulfid) + H₂. Diese Reaktion erfolgt entweder im Einschmelzvergaser oder in der ersten Reduktionsanlage. Bei der Herstellung von flüssigem Roheisen werden neben den eisenoxidhältigen Einsatzstoffen auch Zuschlagstoffe wie CaO (Kalziumoxid) und/oder MgO (Magnesiumoxid) verwendet. Dabei laufen bei Kontakt dieser Zuschlagstoffe mit dem schwefelhältigen Gas die Reaktionen: CaO (Kalziumoxid) + H₂S -> CaS (Kalziumsulfid) + H₂O (Wasser) beziehungsweise MgO (Magnesiumoxid)+ H₂S -> MgS + H₂O ab. Das Eisen(II)-sulfid, das Magnesiumsulfid und das Kalziumsulfid werden über die Schlacke, welche im Einschmelzvergaser auf dem flüssigen Roheisen schwimmt, ausgetragen.

Damit erfolgt eine sehr umweltfreundliche Entschwefelung des schwefelhältigen Gases, da der Schwefel überwiegend in der Schlacke gebunden ist und daher nicht in die Atmosphäre gelangt. Weiter wird durch das Eindüsen beziehungsweise Einbringen des schwefelhältigen Gases in das erfindungsgemäße Verfahren der Wasserstoffgehalt des Reduktionsgases erhöht. Dies führt durch Erhöhung der Reaktionskinetik zu einer Verbesserung des Reduktionsprozesses in der ersten Reduktionsanlage. Durch die direkte Nutzung des schwefelhältigen Gases im erfindungsgemäßen Verfahren entfallen teure und aufwändige Einrichtungen zur Entschwefelung, ohne die Qualität des flüssigen Roheisens hinsichtlich des Schwefelgehaltes negativ zu beeinflussen. Auch das DRI in der zweiten Reduktionsanlage wird durch das Einbringen des schwefelhältigen Gases in die erste Reduktionsanlage beziehungsweise in den Einschmelzvergaser hinsichtlich seines Schwefelgehaltes nicht negativ beeinflusst, da das Exportgas, welches in die zweite Reduktionsanlage eingebracht wird, bereits entschwefelt in dieses gelangt. Vor oder bei der Weiterverarbeitung des DRI zu flüssigem Stahl entfallen daher zusätzliche Entschwefelungsprozesse.

Das Koksofengas enthält neben Schwefel auch CH₄ (Methan), C₂H₄ (Ethan), C₆H₆ (Benzol), C₇H₈ (Toluol) und C₁₀H₈ (Naphtalin), welche teilweise giftig und allesamt unerwünscht im erfindungsgemäßen Verfahren sind. Diese im Koksofengas enthaltenen Kohlenwasserstoffe werden im Einschmelzvergaser beziehungsweise in der ersten Reduktionsanlage durch die darin vorherrschenden hohen Temperaturen und durch den darin enthaltenen Sauerstoff zumindest teilweise in CO (Kohlenmonoxid), CO₂ (Kohlendioxid), H₂O (Wasser) und C (Kohlenstoff) umgesetzt. Mittels des erfindungsgemäßen Verfahrens werden die im Koksofengas enthaltenen Kohlenwasserstoffe in für das erfindungsgemäße Verfahren vergleichsweise unschädliche und in für die Umwelt vergleichsweise unproblematische Verbindungen und Elemente umgesetzt.

Mittels des erfindungsgemäßen Verfahrens kann schwefelhältiges Gas, insbesondere Koksofengas bei der Herstellung von flüssigem Roheisen beziehungsweise DRI bei gleichzeitiger Produktivitätssteigerung eingesetzt werden, ohne die Umwelt zu belasten oder die Qualität des flüssigen Roheisens oder des DRI negativ zu beeinflussen.

Eine bevorzugte Ausführungsform des erfindungsgemäßen Verfahrens ist **dadurch gekennzeichnet, dass** die erste Reduktionsanlage zumindest einen ersten und einen zweiten Wirbelschichtreaktor umfasst, dass die Wirbelschichtreaktoren mittels Verbindungsleitungen zum Einbringen des Reduktionsgases in die Wirbelschichtreaktoren und zum Abziehen des Reduktionsgases aus den Wirbelschichtreaktoren verbunden sind, dass das Reduktionsgas nach Durchströmen der beiden Wirbelschichtreaktoren als Exportgas abgezogen wird und dass das Verfahren weiter umfasst:
- Eindüsen des schwefelhältigen Gases zusammen mit dem sauerstoffhältigen Gas in zumindest eine der Verbindungsleitungen mittels Sauerstoffbrenner und/oder
- Einbringen des schwefelhältigen Gases direkt in zumindest eine der Verbindungsleitungen.

Typischerweise handelt es sich bei dieser Ausführungsform um Wirbelschichtreaktoren einer FINEX® - Reduktionskaskade, welche aus dem Stand der Technik hinreichend bekannt ist. Die einzelnen Wirbelschichtreaktoren sind mittels der Verbindungsleitungen verbunden, wobei das Reduktionsgas zunächst in den ersten Wirbelschichtreaktor eingeleitet wird. Nach Reduktion der eisenoxidhältigen Einsatzstoffe im ersten Wirbelschichtreaktor wird das Reduktionsgas mittels der Verbindungsleitung aus diesem abgezogen und in den weiteren Wirbelschichtreaktor zur Reduktion der darin befindlichen eisenoxidhältigen Einsatzstoffe eingeleitet. Sind mehr als zwei Wirbelschichtreaktoren vorhanden, so erfolgt dieser Vorgang entsprechend öfter. Nach Durchströmen des letzten vorhandenen Wirbelschichtreaktors wird das verbrauchte Reduktionsgas aus diesem als Exportgas abgezogen. Bei dieser Ausführungsform des erfindungsgemäßen Verfahrens erfolgt das Eindüsen des schwefelhältigen Gases zusammen mit dem sauerstoffhältigen Gas in zumindest eine der Verbindungsleitungen mittels Sauerstoffbrenner und/oder das Einbringen des schwefelhältigen Gases direkt in zumindest eine der Verbindungsleitungen. Unter direkt ist in diesem Zusammenhang das unmittelbare Einbringen des schwefelhältigen Gases in die Verbindungsleitungen zu verstehen. Das bedeutet, dass das schwefelhältige Gas ohne vorherige Verbrennung im Sauerstoffbrenner in die Verbindungsleitung eingebracht wird.

Neben den schon erwähnten Vorteilen des erfindungsgemäßen Verfahrens ergibt sich auf Grund des im schwefelhältigen Gas, insbesondere des im Koksofengas vorhandenen Reduktionspotentials eine weitere vorteilhafte Wirkung. Koksofengas enthält typischerweise zwischen 60 und 65 Volumsprozent Wasserstoff (H₂) und zwischen 6 und 6,5 Volumsprozent Kohlenmonoxid (CO). Damit ist im Koksofengas Reduktionspotential - darunter ist die Fähigkeit Eisenoxide zu Eisen zu reduzieren zu verstehen - vorhanden. Dieses Reduktionspotential wird beim erfindungsgemäßen Einbringen des schwefelhältigen Gases in den Einschmelzvergaser, in die Reduktionsgasleitung beziehungsweise in die Verbindungsleitungen genutzt, wodurch eine Reduzierung des Reduktionsmittelverbrauchs, insbesondere der Kohlenstoffträger wie Kohle oder Kohlebriketts im Einschmelzvergaser erzielt wird.

In einer weiteren Ausführungsform des erfindungsgemäßen Verfahrens ist das schwefelhältige Gas schwefelhältiges Erdgas oder eine Mischung aus dem schwefelhältigen Erdgas und dem Koksofengas.

Damit kann auch schwefelhältiges Erdgas oder eine Mischung aus dem schwefelhältigen Erdgas und dem Koksofengas bei der Herstellung von flüssigem Roheisen genutzt und gleichzeitigentschwefelt werden.

Ein weiterer Gegenstand der vorliegenden Erfindung ist eine Vorrichtung zur Durchführung des erfindungsgemäßen Verfahrens, wobei die Vorrichtung umfasst: eine erste Reduktionsanlage mit einer Exportgasleitung und einer Zufuhrleitung zur Zufuhr von eisenoxidhältigen Einsatzstoffen, einen Einschmelzvergaser, welcher über eine Reduktionsgasleitung mit der ersten Reduktionsanlage verbunden ist, zumindest eine zweite Reduktionsanlage, welche über die Exportgasleitung mit der ersten Reduktionsanlage verbunden ist, eine in der Exportgasleitung angeordnete CO₂-Entfernungsanlage zur Entfernung von CO₂, zumindest eine in den Einschmelzvergaser mündende Eisenproduktzufuhrleitung und eine Kohlenstoffträgerzufuhrleitung, ein oder mehrere in den Einschmelzvergaser mündende Einbringelemente, welche als Sauerstoffdüsen oder als Staubbrenner oder als Sauerstoffbrenner ausgebildet sind, mit jeweils einer Medienzufuhrleitung zum Einbringen eines Gases und/oder eines Feststoffes in den Einschmelzvergaser, wobei zumindest eine Prozessgasleitung zur Zufuhr eines schwefelhältigen Gases, insbesondere Koksofengas, vorhanden ist, welche
- in zumindest eine der Medienzufuhrleitungen und/oder
- in zumindest eines der Einbringelemente und/oder
- in die Reduktionsgasleitung
mündet.

Ein Einschmelzvergaser ist, im Gegensatz zu einem Hochofen, dadurch charakterisiert, dass er überwiegend mit Reduktionsmitteln in stückiger Form, wie beispielsweise Stückkohle beziehungsweise Kohlebriketts, mit zumindest vorreduzierten Eisenträgern und mit technisch reinem Sauerstoff - Sauerstoffanteil größer als 90 Volumsprozent - betrieben wird. Außerdem weist ein Einschmelzvergaser, im Gegensatz zu einem Hochofen, eine Kuppel mit einem Beruhigungsraum auf.

Die erste Reduktionsanlage ist über die Reduktionsgasleitung mit dem Einschmelzvergaser verbunden. Die erste Reduktionsanlage kann beispielsweise als ein aus dem Stand der Technik bekannter COREX® - Reduktionsschacht oder als ein Wirbelschichtreaktor einer FINEX® - Reduktionskaskade ausgebildet sein. Unter eisenoxidhältige Einsatzstoffe sind Eisenerzprodukte zu verstehen. Das bei der Reduktion der eisenoxidhältigen Einsatzstoffe in der ersten Reduktionsanlage verbrauchte Reduktionsgas wird aus der ersten Reduktionsanlage mittels der Exportgasleitung als Exportgas abgezogen. Die Exportgasleitung mündet in die zweite, von der ersten Reduktionsanlage verschiedene, Reduktionsanlage. Die zweite Reduktionsanlage ist vorzugsweise als Direktreduktionsschacht ausgebildet. Bekannte Direktreduktionsschächte sind beispielsweise MIDREX® - Hochdruckschächte oder MIDREX® - Niederdruckschächte. Die zweite Reduktionsanlage kann auch, so wie die erste Reduktionsanlage, als Wirbelschichtreaktor einer Reduktionskaskade ausgebildet sein. In der zweiten Reduktionsanlage wird das DRI hergestellt. In der Exportgasleitung ist die CO₂-Entfernungsanlage, vorzugsweise eine Druckwechselabsorptionsanlage (PSA-Anlage) oder eine Vakuum-Druckwechseladsorptionsanlage (VPSA-Anlage), zur Entfernung von CO₂ aus dem Exportgas angeordnet. Gegebenenfalls sind zusätzlich ein oder mehrere Kompressorstufen und/oder Heizeinrichtungen und/oder Kühleinrichtungen in der Exportgasleitung angeordnet. Der Einschmelzvergaser weist zumindest eine in den Einschmelzvergaser mündende Eisenproduktzufuhrleitung und eine Kohlenstoffträgerzufuhrleitung auf. Über die Eisenproduktzufuhrleitung wird das erste teilreduzierte Eisenprodukt aus der ersten Reduktionsanlage in den Einschmelzvergaser eingebracht. Über die Kohlenstoffträgerzufuhrleitung werden die Kohlenstoffträger, vorzugsweise Stückkohlen oder Kohlebriketts, in den Einschmelzvergaser eingebracht. Mittels der Medienzufuhrleitungen, welche in die Einbringelemente des Einschmelzvergasers münden, werden die Gase oder die Feststoffe in den Einschmelzvergaser eingebracht. Insbesondere werden das sauerstoffhältige Gas und der Staub mittels der Medienzufuhrleitungen in den Einschmelzvergaser eingebracht. Im Einschmelzvergaser wird das flüssige Roheisen hergestellt. Die Prozessgasleitungen zur Zufuhr des schwefelhältigen Gases, insbesondere des Koksofengases, münden erfindungsgemäß in zumindest einer der Medienzufuhrleitungen und/oder in zumindest einem der Einbringelemente. Die Einbringelemente sind als Sauerstoffdüsen oder als Staubbrenner oder als Sauerstoffbrenner ausgebildet. Erfindungsgemäß können ein oder mehrere Prozessgasleitungen auch in die Reduktionsgasleitung münden. In der Reduktionsgasleitung befinden sich gegebenenfalls Entstaubungseinrichtungen zur Entstaubung des Reduktionsgases. Die Prozessgasleitungen können, in Strömungsrichtung des Reduktionsgases gesehen, vor und/oder nach der Entstaubungseinrichtung in die Reduktionsgasleitung münden.

Mittels der erfindungsgemäßen Vorrichtung kann schwefelhältiges Gas, insbesondere Koksofengas, bei der Herstellung von flüssigem Roheisen, beziehungsweise DRI, bei gleichzeitiger Produktivitätssteigerung eingesetzt werden, ohne die Umwelt zu belasten oder die Qualität des flüssigen Roheisens oder des DRI negativ zu beeinflussen.

In einer Ausführungsform der erfindungsgemäßen Vorrichtung umfasst die erste Reduktionsanlage zumindest einen ersten und einen zweiten Wirbelschichtreaktor, wobei die Wirbelschichtreaktoren mittels Verbindungsleitungen zum Einbringen des Reduktionsgases in die Wirbelschichtreaktoren und Abziehen des Reduktionsgases aus den Wirbelschichtreaktoren verbunden sind, ein oder mehrere in zumindest eine der Verbindungsleitungen mündende und als Sauerstoffdüsen ausgebildete Einbringelemente mit jeweils einer Medienzufuhrleitung zum Einbringen eines Gases in die Verbindungsleitung und zumindest eine Prozessgasleitung zur Zufuhr eines schwefelhältigen Gases, insbesondere Koksofengas, welche
- in zumindest eine der Medienzufuhrleitungen und/oder
- in zumindest eines der Einbringelemente und/oder
- in zumindest eine der Verbindungsleitungen mündet.

In einer bevorzugten Ausführungsform der erfindungsgemäßen Vorrichtung entspringt die Prozessgasleitung aus einer das schwefelhältige Gas produzierenden Anlage, insbesondere einer Anlage zur Herstellung von Koks und/oder einer Kohlevergasungsanlage und/oder aus einer anderen Quelle für schwefelhältiges Erdgas.

Damit kann auch schwefelhältiges Erdgas oder eine Mischung aus dem schwefelhältigen Erdgas und dem Koksofengas bei der Herstellung von flüssigem Roheisen genutzt und gleichzeitigentschwefelt werden.

### Kurze Beschreibung der Zeichnung

Es zeigt beispielhaft und schematisch

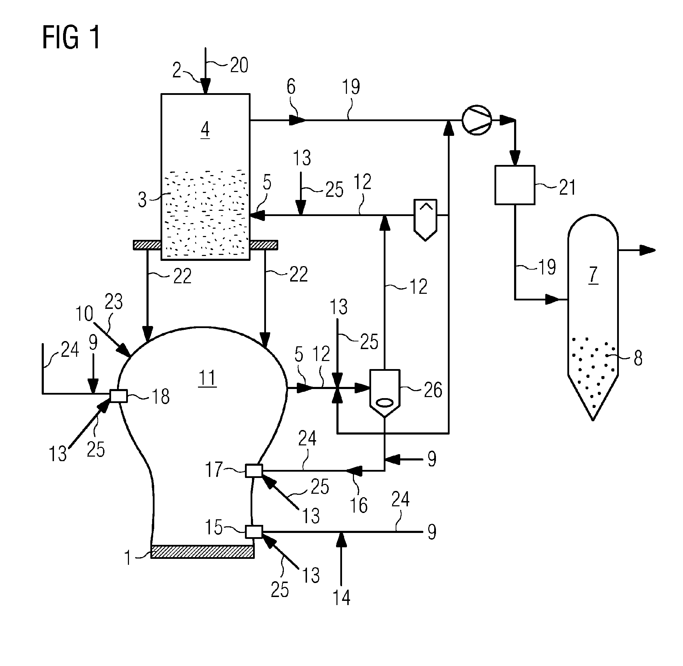

FIG 1 ein erfindungsgemäßes Verfahren und eine erfindungsgemäße Vorrichtung zur Herstellung von flüssigem Roheisen 1 unter Nutzung und Entschwefelung von Koksofengas.

### Beschreibung der Ausführungsform

FIG 1 zeigt ein erfindungsgemäßes Verfahren und eine erfindungsgemäße Vorrichtung zur Herstellung von flüssigem Roheisen 1 unter Nutzung und Entschwefelung von Koksofengas in der Ausführung einer COREX® - Direktreduktionsverbundanlage.

Einer ersten Reduktionsanlage 4, einem COREX® - Reduktionsschacht mit Festbett, werden über einer Zufuhrleitung 20 zur Zufuhr von eisenoxidhältigen Einsatzstoffen 2 die eisenoxidhältigen Einsatzstoffe 2 zugeführt. Diese werden mittels eines Reduktionsgases 5 zu einem teilreduzierten ersten Eisenprodukt 3 reduziert, welches anschließend über mehrere in einen Einschmelzvergaser 11 mündende Eisenproduktzufuhrleitungen 22 in den Einschmelzvergaser 11 eingebracht wird. Zusätzlich werden in den Einschmelzvergaser 11 Kohlenstoffträger 10 als Stückkohlen über eine Kohlensstoffträgerzufuhrleitung 23 und sauerstoffhältiges Gas 9 über Medienzufuhrleitungen 24 eingebracht. Die in den Einschmelzvergaser 11 eingebrachten Kohlenstoffträger 10 werden mittels des sauerstoffhältigen Gases 9 unter Entstehung des Reduktionsgases 5 vergast. Das Reduktionsgas 5 wird über die Reduktionsgasleitung 12 in die erste Reduktionsanlage 4 eingebracht. Das in den Einschmelzvergaser 11 eingebrachte erste Eisenprodukt 3 wird durch die bei der Vergasung der Kohlenstoffträger 10 entstehende Wärme zu dem flüssigen Roheisen 1 aufgeschmolzen. Das bei der Reduktion der eisenoxidhältigen Einsatzstoffe 2 verbrauchte Reduktionsgas 5 wird aus der ersten Reduktionsanlage 4 über eine Exportgasleitung 19 als Exportgas 6 abgezogen und komprimiert wonach eine CO₂-Entfernung in einer in der Exportgasleitung 19 angeordneten CO₂-Entfernungseinrichtung 21 erfolgt. Anschließend wird das Exportgas 6 in eine zweite Reduktionsanlage 7 zur Herstellung eines teilreduzierten zweiten Eisenprodukts 8, insbesondere Direct Reduced Iron (DRI), eingebracht. Der Einschmelzvergaser 11 verfügt über drei in den Einschmelzvergaser 11 mündende Einbringelemente, welche als Sauerstoffdüse 15, als Staubbrenner 17 und als Sauerstoffbrenner 18 ausgebildet sind. Außenseitig, bezogen auf den Einschmelzvergaser 11, sind die Einbringelemente mit den Medienzufuhrleitungen 24 verbunden. Es sind fünf Prozessgasleitungen 25 vorhanden, wobei zwei der Prozessgasleitungen 25 in die Reduktionsgasleitung 12 und jeweils eine in die Sauerstoffdüse 15, in den Staubbrenner 17 und in den Sauerstoffbrenner 18 münden. Über die Prozessgasleitungen 25 wird dem Einschmelzvergaser 11 schwefelhältiges Gas 13, im konkreten Fall Koksofengas mit einer typischen Zusammensetzung von
- 65 Volumsprozent Wasserstoff (H₂),
- 2,5 Volumsprozent Stickstoff (N₂),
- 6 Volumsprozent Kohlenmonoxid (CO),
- 22 Volumsprozent Methan (CH₄),
- 3 Volumsprozent andere Kohlenwasserstoffe (CₙHₘ),
- 1,5 Volumsprozent Kohlendioxid (CO₂),
- 350 mg Schwefelwasserstoff (H₂S) pro Normkubikmeter Koksofengas,
- 500 mg Teer pro Normkubikmeter Koksofengas und
- 500 mg Staub pro Normkubikmeter Koksofengas,
zugeführt.

Die Zufuhr des Koksofengases erfolgt durch Eindüsen des Koksofengases in den Einschmelzvergaser 11, wobei im ersten Fall das Koksofengas zusammen mit dem sauerstoffhältigen Gas 9 und Feinkohle 14 mittels der Sauerstoffdüse 15, im zweiten Fall das Koksofengas zusammen mit Staub 16 und dem sauerstoffhältigen Gas 9 mittels des Staubbrenners 17 und im dritten Fall das Koksofengas zusammen mit dem sauerstoffhältigen Gas 9 mittels des Sauerstoffbrenners 18 in den Einschmelzvergaser eingedüst wird. Im vierten Fall wird das schwefelhältige Gas 13, beziehungsweise das Koksofengas, mittels der Prozessgasleitungen 25 direkt in die Reduktionsgasleitung 12 eingebracht. In Strömungsrichtung des Reduktionsgases 5 gesehen, erfolgt dies einmal vor einer in der Reduktionsgasleitung 12 angeordneten Entstaubungseinrichtung 26 und einmal nach dieser. Die Prozessgasleitungen 25 entspringen einer das schwefelhältige Gas 13 produzierenden Anlage, insbesondere einer Kokerei.

Zusammenfassend betrifft die Erfindung ein Verfahren zur Herstellung von flüssigem Roheisen 1, bei dem eisenoxidhältige Einsatzstoffe 2 in einer ersten Reduktionsanlage 4 mittels eines Reduktionsgases 5 zu einem teilreduzierten ersten Eisenprodukt 3 reduziert und in einem Einschmelzvergaser 11 zu dem flüssigen Roheisen 1 aufgeschmolzen werden, wobei das verbrauchte Reduktionsgas 5 als Exportgas 6 in eine zweite Reduktionsanlage 7 eingebracht wird, und wobei ein schwefelhältiges Gas 13, zusammen mit einem sauerstoffhältigen Gas 9 und/oder zusammen mit Staub 16 in den Einschmelzvergaser 11 und/oder in die Reduktionsgasleitung 12 eingebracht wird.

Weiter betrifft die Erfindung eine Vorrichtung zur Durchführung des Verfahrens.

Damit kann schwefelhältiges Gas 13, insbesondere Koksofengas, bei der Herstellung von flüssigem Roheisen 1, beziehungsweise DRI, bei gleichzeitiger Produktivitätssteigerung eingesetzt werden, ohne die Umwelt zu belasten oder die Qualität des flüssigen Roheisens 1 oder des DRI negativ zu beeinflussen.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

### Liste der Bezugszeichen

1 flüssiges Roheisen
2 eisenoxidhältige Einsatzstoffe
3 teilreduziertes erstes Eisenprodukt
4 erste Reduktionsanlage
5 Reduktionsgas
6 Exportgas
7 zweite Reduktionsanlage
8 teilreduziertes zweites Eisenprodukt
9 sauerstoffhältiges Gas
10 Kohlenstoffträger
11 Einschmelzvergaser
12 Reduktionsgasleitung
13 schwefelhältiges Gas
14 Feinkohle
15 Sauerstoffdüse
16 Staub
17 Staubbrenner
18 Sauerstoffbrenner
19 Exportgasleitung
20 Zufuhrleitung zur Zufuhr von eisenoxidhältigen Einsatzstoffen
21 CO₂-Entfernungsanlage
22 Eisenproduktzufuhrleitung
23 Kohlenstoffträgerzufuhrleitung
24 Medienzufuhrleitung
25 Prozessgasleitung
26 Entstaubungseinrichtung

## Patentansprüche

1. Verfahren zur Herstellung von flüssigem Roheisen (1), wobei das Verfahren umfasst:
- Reduktion von eisenoxidhältigen Einsatzstoffen (2) zu einem teilreduzierten ersten Eisenprodukt (3) in einer ersten Reduktionsanlage (4) mittels eines Reduktionsgases (5) und Abziehen des bei der Reduktion verbrauchten Reduktionsgases (5) als Exportgas (6),
- Entfernen von CO₂ aus dem Exportgas (6) und Einbringen des Exportgases (6) in zumindest eine zweite Reduktionsanlage (7) zur Herstellung eines teilreduzierten zweiten Eisenprodukts (8),
- Einbringen des teilreduzierten ersten Eisenprodukts (3), eines sauerstoffhältigen Gases (9) und Kohlenstoffträger (10) in einen Einschmelzvergaser (11),
- Vergasung der Kohlenstoffträger (10) mit dem sauerstoffhältigen Gas (9) und Aufschmelzen des teilreduzierten ersten Eisenprodukts (3) zu dem flüssigen Roheisen (1) unter Entstehung des Reduktionsgases (5) im Einschmelzvergaser (11),
- Einbringen zumindest einer Teilmenge des Reduktionsgases (5) in die erste Reduktionsanlage (4) mittels einer Reduktionsgasleitung (12),
**dadurch gekennzeichnet, dass** das Verfahren weiter umfasst:
- Eindüsen eines schwefelhältigen Gases (13), insbesondere Koksofengas, zusammen mit dem sauerstoffhältigen Gas (9) und gegebenenfalls zusammen mit Feinkohle (14) in den Einschmelzvergaser (11) mittels Sauerstoffdüsen (15) und/oder
- Eindüsen des schwefelhältigen Gases (13) zusammen mit Staub (16) und dem sauerstoffhältigen Gas (9) in den Einschmelzvergaser (11) mittels Staubbrenner (17) und/oder
- Eindüsen des schwefelhältigen Gases (13) zusammen mit dem sauerstoffhältigen Gas (9) in den Einschmelzvergaser (11) mittels Sauerstoffbrenner (18) und/oder
- Einbringen des schwefelhältigen Gases (13) in die Reduktionsgasleitung (12).

2. Verfahren nach Anspruch 1, **dadurch gekennzeichnet, dass** die erste Reduktionsanlage (4) zumindest einen ersten und einen zweiten Wirbelschichtreaktor umfasst, dass die Wirbelschichtreaktoren mittels Verbindungsleitungen zum Einbringen des Reduktionsgases (5) in die Wirbelschichtreaktoren und zum Abziehen des Reduktionsgases (5) aus den Wirbelschichtreaktoren verbunden sind, dass das Reduktionsgas (5) nach Durchströmen der beiden Wirbelschichtreaktoren als Exportgas (6) abgezogen wird und dass das Verfahren weiter umfasst:
- Eindüsen des schwefelhältigen Gases (13) zusammen mit dem sauerstoffhältigen Gas (9) in zumindest eine der Verbindungsleitungen mittels Sauerstoffbrenner und/oder
- Einbringen des schwefelhältigen Gases (13) direkt in zumindest eine der Verbindungsleitungen.

3. Verfahren nach einem der Ansprüche 1 oder 2, **dadurch gekennzeichnet, dass das** schwefelhältige Gas (13) schwefelhältiges Erdgas oder eine Mischung aus dem schwefelhältigen Erdgas und Koksofengas ist.

4. Vorrichtung zur Durchführung des Verfahrens nach einem der Ansprüche 1 bis 3, wobei die Vorrichtung umfasst:
- eine erste Reduktionsanlage (4) mit einer Exportgasleitung (19) und einer Zufuhrleitung (20) zur Zufuhr von eisenoxidhältigen Einsatzstoffen (2),
- einen Einschmelzvergaser (11), welcher über eine Reduktionsgasleitung (12) mit der ersten Reduktionsanlage (4) verbunden ist,
- zumindest eine zweite Reduktionsanlage (7), welche über die Exportgasleitung (19) mit der ersten Reduktionsanlage (4) verbunden ist,
- eine in der Exportgasleitung (19) angeordnete CO₂-Entfernungsanlage (21) zur Entfernung von CO₂,
- zumindest eine in den Einschmelzvergaser (11) mündende Eisenproduktzufuhrleitung (22) und eine Kohlenstoffträgerzufuhrleitung (23),
- ein oder mehrere in den Einschmelzvergaser (11) mündende Einbringelemente, welche als Sauerstoffdüse (15) oder als Staubbrenner (17) oder als Sauerstoffbrenner (18) ausgebildet sind, mit jeweils einer Medienzufuhrleitung (24) zum Einbringen eines Gases und/oder eines Feststoffes in den Einschmelzvergaser (11),
**dadurch gekennzeichnet, dass**
zumindest eine Prozessgasleitung (25) zur Zufuhr eines schwefelhältigen Gases (13), insbesondere Koksofengas, vorhanden ist, welche
- in zumindest eine der Medienzufuhrleitungen (24) und/oder
- in zumindest eines der Einbringelemente und/oder
- in die Reduktionsgasleitung (12)
mündet.

5. Vorrichtung nach Anspruch 4, **dadurch gekennzeichnet, dass** die erste Reduktionsanlage (4) zumindest einen ersten und einen zweiten Wirbelschichtreaktor umfasst, wobei die Wirbelschichtreaktoren mittels Verbindungsleitungen zum Einbringen des Reduktionsgases (5) in die Wirbelschichtreaktoren und Abziehen des Reduktionsgases (5) aus den Wirbelschichtreaktoren verbunden sind, dass ein oder mehrere in zumindest eine der Verbindungsleitungen mündende und als Sauerstoffdüsen (18) ausgebildete Einbringelemente mit jeweils einer Medienzufuhrleitung (24) zum Einbringen eines Gases in die Verbindungsleitung vorhanden sind und dass zumindest eine Prozessgasleitung (25) zur Zufuhr eines schwefelhältigen Gases (13), insbesondere Koksofengas, vorhanden ist, welche
- in zumindest eine der Medienzufuhrleitungen (24) und/oder
- in zumindest eines der Einbringelemente und/oder
- in zumindest eine der Verbindungsleitungen mündet.

6. Vorrichtung nach einem der Ansprüche 4 oder 5, **dadurch gekennzeichnet, dass** die Prozessgasleitung (25) aus einer das schwefelhältige Gas (13) produzierenden Anlage, insbesondere einer Anlage zur Herstellung von Koks und/oder einer Kohlevergasungsanlage und/oder einer Quelle für schwefelhältiges Erdgas entspringt.
